# EUROPÄISCHE PATENTANMELDUNG

(11) **EP 3 712 189 A1**
(43) Veröffentlichungstag der Anmeldung: **23.09.2020**
(21) Anmeldenummer: 19163531.7
(22) Anmeldetag: 18.03.2019
(51) Int. Cl.: C08G 18/48, C08G 18/65, C08G 18/66, C08G 18/69, C08G 18/76, C08G 18/79, C08G 18/08, C08G 18/32, C08G 18/40, C08G 18/42, C09J 175/06

(54) **ZWEIKOMPONENTIGE POLYURETHANZUSAMMENSETZUNG**

(71) Anmelder: SIKA TECHNOLOGY AG, 6340 Baar (CH)
(72) Erfinder: Kelch, Steffen, 8102 Oberengstringen (CH)
(74) Vertreter: Sika Patent Attorneys

(57) **Zusammenfassung**

Die vorliegende Erfindung betrifft eine zweikomponentige Polyurethanzusammensetzung bestehend aus einer Polyolkomponente und einer Polyisocyanatkomponente, wobei die Polyolkomponente mindestens ein Polyesterpolyol **A1** basierend auf Dimerfettsäuren und/oder Dimerfettalkoholen mit einer OH-Zahl von 65 - 350 mg KOH/g, mindestens ein Polybutadienpolyol **A2** und mindestens ein alkoxyliertes Alkylendiamin **A3** umfasst. Die erfindungsgemässe Polyurethanzusammensetzung verfügt über eine hohe Festigkeit und eine nur schwach ausgeprägte Abhängigkeit der mechanischen Eigenschaften, insbesondere der Festigkeit, von der Temperatur, insbesondere im Bereich von -40°C bis +100°C.

## Beschreibung

### Technisches Gebiet

Die Erfindung betrifft das Gebiet der zweikomponentigen Polyurethanzusammensetzungen und ihre Verwendung, insbesondere als Klebstoff, Vergussmasse oder als Infusionsharz.

### Stand der Technik

Zweikomponentige Polyurethanklebstoffe auf Basis von Polyolen und Polyisocyanaten werden bereits seit langem eingesetzt. Zweikomponentige Polyurethanklebstoffe haben den Vorteil, dass sie nach dem Mischen schnell aushärten und deshalb bereits nach kurzer Zeit höhere Kräfte aufnehmen und übertragen können. Für den Einsatz als strukturelle Klebstoffe werden hohe Ansprüche in Bezug auf Festigkeit gestellt, da derartige Klebstoffe Elemente von Last tragenden Strukturen darstellen. Auch für den Einsatz als Vergussmassen oder Infusionsharze werden hohe Ansprüche in Bezug auf Festigkeit und Verarbeitbarkeit gestellt.

Es besteht insbesondere der Wunsch nach Klebstoffen, Vergussmassen und Infusionsharzen, die hohe Festigkeiten im Sinne struktureller Verklebungen über einen möglichst grossen Temperaturbereich, insbesondere im Bereich von -40°C bis über +100°C aufweisen/gewährleisten, verbunden mit einer wenig ausgeprägten Abhängigkeit der Festigkeit von der Temperatur. Gewünscht sind weiterhin Klebstoffe, respektive Vergussmassen oder Infusionsharze, welche bei Umgebungsbedingungen ohne Schäumungsreaktion aushärten und eine gute Haftung, insbesondere auf faserverstärkten Kunststoffen, über einen breiten Temperaturbereich aufweisen.

### Darstellung der Erfindung

Aufgabe der vorliegenden Erfindung ist es daher, eine zweikomponentige Polyurethanzusammensetzung zur Verfügung zu stellen, welche über eine hohe Festigkeit und eine nur schwach ausgeprägte Abhängigkeit der mechanischen Eigenschaften, insbesondere der Festigkeit, von der Temperatur verfügt, insbesondere im Bereich von -40°C bis +100°C. Weiter soll die Zusammensetzung bei Umgebungsbedingungen ohne Schaumbildung aufgrund einer Reaktion von Isocyanatgruppen mit Feuchtigkeit aushärten, auch bei Substraten, welche Schäumungsreaktionen aufgrund von vorhandener Restfeuchtigkeit typischerweise begünstigen und eine gute Haftung, insbesondere auf faserverstärkten Kunststoffen, über einen breiten Temperaturbereich aufweisen.

Überraschenderweise wird diese Aufgabe mit der erfindungsgemässen zweikomponentigen Polyurethanzusammensetzung gelöst. Die Zusammensetzung verfügt über eine hohe Zugfestigkeit und hohe E-moduli mit einer nur schwach ausgeprägten Abhängigkeit der mechanischen Eigenschaften, insbesondere der Zugfestigkeit und der E-moduli, von der Temperatur.

Zudem ist die Zusammensetzung besonders unempfindlich gegenüber Schäumungsreaktionen, die durch Luftfeuchtigkeit oder verbleibender Restfeuchtigkeit in der Polyolkomponente und/oder der Substrate ausgelöst werden. Weiter zeigt die Zusammensetzung über einen breiten Temperaturbereich eine gute Haftung auf kohlefaserverstärkten Kunststoffen (CFK).

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft eine zweikomponentige Polyurethanzusammensetzung bestehend aus einer Polyolkomponente **K1** und einer Polyisocyanatkomponente **K2;**
wobei die Polyolkomponente **K1**
- mindestens ein Polyesterpolyol **A1** basierend auf Dimerfettsäuren und/oder Dimerfettalkoholen mit einer OH-Zahl von 65 - 350 mg KOH/g; und
- mindestens ein Polybutadienpolyol mit einer OH-Funktionalität im Bereich von 2.1 - 2.9, insbesondere 2.3 - 2.7 und einer OH-Zahl von 40 -100 mg KOH/g **A2;** und
- mindestens ein alkoxyliertes Alkylendiamin mit einer OH-Zahl von 350 - 950 mg KOH/g **A3;**
umfasst,
und wobei die Polyisocyanatkomponente **K2**
mindestens ein aromatisches Polyisocyanat **B1** umfasst.

Das Verhältnis der OH-Gruppen von **A1/A2** beträgt von 1 - 20.

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppe pro Molekül enthält.

Unter "Molekulargewicht" versteht man im vorliegenden Dokument die molare Masse (in Gramm pro Mol) eines Moleküls. Als "mittleres Molekulargewicht" wird das zahlenmittlere Molekulargewicht Mₙ einer polydispersen Mischung von oligomeren oder polymeren Molekülen bezeichnet, welches üblicherweise mittels GPC gegen Polystyrol als Standard bestimmt wird.

Als "primäre Hydroxylgruppe" wird eine OH-Gruppe bezeichnet, welche an ein C-Atom mit zwei Wasserstoffen gebunden ist.

Als "Offenzeit" wird in diesem Dokument die Zeit bezeichnet, innerhalb welcher die zu verklebenden Teile gefügt sein müssen, nachdem die Komponenten gemischt wurden.

Der Begriff "Festigkeit" bezeichnet im vorliegenden Dokument die Festigkeit des ausgehärteten Klebstoffs, wobei mit Festigkeit insbesondere die Zugfestigkeit und das Elastizitätsmodul (E-Modul), insbesondere im Dehnungsbereich 0.05 bis 0.25%, gemeint sind.

Als "Raumtemperatur" wird im vorliegenden Dokument eine Temperatur von 23°C bezeichnet.

Die Glasübergangstemperatur (nachgehend abgekürzt auch mit Tg), wird im vorliegenden Dokument nach der Methode bestimmt, wie sie im Beispielteil beschrieben ist.

Vorzugsweise wird in der vorliegenden Anmeldung die OH-Zahl (Hydroxylzahl) titrimetrisch, insbesondere durch Acetylierung mit Essigsäureanhydrid und nachfolgender Titration des überschüssigen Essigsäureanhydrids mit alkoholischer Kalilauge bestimmt, besonders bevorzugt gemäss DIN 53240.

Die Polyolkomponente **K1** umfasst:
- mindestens ein Polyesterpolyol **A1** basierend auf Dimerfettsäuren und/oder Dimerfettalkoholen mit einer OH-Zahl von 65 - 350 mg KOH/g.

Vorzugsweise handelt es sich bei dem mindestens einen Polyesterpolyol **A1** um ein Polyesterpolyol **A1** basierend auf Dimerfettsäuren.

Vorzugsweise handelt es sich bei dem mindestens einen Polyesterpolyol **A1** um ein Polyesterpolyol **A1** basierend auf Dimerfettsäuren abgeleitet aus C₁₀ - C₂₆- Fettsäuren, bevorzugter C₁₂ - C₂₂- Fettsäuren, insbesondere C₁₄ - C₂₂-Fettsäuren, C₁₆ - C₂₀-Fettsäuren, am meisten bevorzugt C₁₈-Fettsäuren.

Vorzugsweise handelt es sich bei dem mindestens einen Polyesterpolyol **A1** um ein Polyesterpolyol **A1** basierend auf Dimerfettsäuren, welche ausgewählt sind aus der Liste bestehend aus Dimerisierungsprodukten von Fettsäuren ausgewählt aus der Liste bestehend aus Ölsäure, Linolsäure, Linolensäure, Palmitoleinsäure und Elaidinsäure.

Die Dimerisierungsprodukte der ungesättigten Fettsäuregemische, die bei der Hydrolyse von natürlichen Fetten und Ölen erhalten werden, z. B. Sonnenblumenöl, Sojaöl, Olivenöl, Rapsöl, Baumwollsamenöl und Tallöl, können ebenfalls verwendet werden. Zusätzlich zu den Dimerfettsäuren führt die Dimerisierung üblicherweise dazu, dass variierende Mengen an oligomeren Fettsäuren (sogenannte "Trimere") und Reste von monomeren Fettsäuren (sogenannte "Monomere") oder Ester davon vorliegen. Geeignete Dimerfettsäuren haben einen Dimersäuregehalt von mehr als 60%, vorzugsweise mehr als 75%, mehr bevorzugt im Bereich von 90 bis 99,5%, insbesondere 95 bis 99% und insbesondere 97 bis 99%.

Im Handel erhältliche geeignete Polyesterpolyole **A1** umfassen amorphe Materialien, vorzugsweise bei Raumtemperatur flüssige Materialien, erhältliche Materialien sind beispielsweise Dynacoll® 7360, 7380, 7330, 7231, 7250 (Evonik), Rucoflex® S-105-10 (Bayer), Stepanpol® PN110 (Stepan), Priplast® 1838, 3196 (Croda PLC, UK).

Vorzugsweise weist das Polyesterpolyol **A1** ein mittleres Molekulargewicht im Bereich von 500 bis 1800 g/mol, 600 bis 1600 g/mol, 700 bis 1500 g/mol, insbesondere 800 bis 1200 g/mol, auf.

Bevorzugt hat das Polyesterpolyol **A1** eine OH-Zahl von 75 - 300, insbesondere 85 - 250, 85 - 200, 90 - 180, 90 - 150, insbesondere bevorzugt 100 -130 mg KOH/g. Weist das Polyesterpolyol **A1** eine OH-Zahl von weniger als 65 mg KOH/g aus, ist diese dahingehend von Nachteil, dass dadurch signifikant tiefere Werte für die Zugfestigkeit sowie die E-Moduli erhalten werden. Dies ist beispielsweise in Tabelle 1 ersichtlich aus dem Vergleich von Ref.2 mit E1 oder E3-4.

Weiter ist eine OH-Zahl von weniger als 65 mg KOH/g dahingehend von Nachteil, dass dadurch signifikant tiefere Werte für die Zugscherfestigkeit erhalten werden. Dies ist beispielsweise ersichtlich aus dem Vergleich von Ref.2 mit E1 in Tabelle 7.

Vorzugsweise handelt es sich bei dem mindestens einen Polyesterpolyol **A1** um ein Diol.

Die Polyolkomponente **K1** umfasst mindestens ein Polybutadienpolyol mit einer OH-Funktionalität im Bereich von 2.1 - 2.9, insbesondere 2.3 - 2.7, und einer OH-Zahl von 40 - 100 mg KOH/g **A2.**

Solche Polybutadienpolyole sind insbesondere erhältlich durch die Polymerisation von 1,3-Butadien und Allylalkohol in einem geeigneten Verhältnis oder durch die Oxidation von geeigneten Polybutadienen.

Geeignete Polybutadienpolyole sind insbesondere Polybutadienpolyole, welche Strukturelemente der Formel (I) und gegebenenfalls Strukturelemente der Formeln (II) und (III) enthalten.

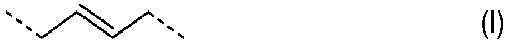

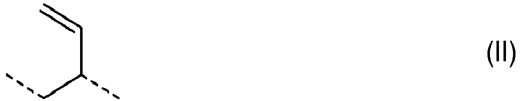

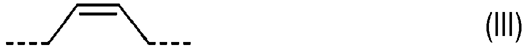

Bevorzugte Polybutadienpolyole enthalten
40 bis 80%, insbesondere 55 bis 65% des Strukturelements der Formel (I),
0 bis 30%, insbesondere 15 bis 25%, des Strukturelements der Formel (II),
0 bis 30%, insbesondere 15 bis 25%, des Strukturelements der Formel (III).

Besonders geeignete Polybutadienpolyole sind beispielweise erhältlich von Cray Valley unter dem Handelsnamen Poly bd® R-45HTLO oder Poly bd® R-45M oder von Evonik unter dem Handelsnamen Polyvest HT.

Das Vorhandensein des mindestens einen Polybutadienpolyols **A2** in der Polyolkomponente **K1** ist dahingehend von Vorteil, dass dadurch ein grösserer Unterschied zwischen der ersten Glasübergangstemperatur (Tg1) und der zweiten Glasübergangstemperatur (Tg2) erreicht wird. Zusätzlich werden höhere Werte für die zweite Glasübergangstemperatur (Tg2) erhalten.

Das Vorhandensein des mindestens einen Polybutadienpolyols **A2** in der Polyolkomponente **K1** ist weiter dahingehend von Vorteil, dass dadurch höhere Werte für die Zugscherfestigkeit erhalten werden, sowohl bei Raumtemperatur als auch bei 80°C. Dies ist beispielsweise in Tabelle 7 ersichtlich aus dem Vergleich von Ref.7 mit E9, Ref.31 mit E21, Ref.4 mit E3 und Ref.28 mit E15

Handelt es sich bei dem aromatischen Polyisocyanat um ein aromatisches Polyisocyanat B1-2, so wird zusätzlich eine tiefere Temperaturen für die erste Glasübergangstemperatur (Tg1) erhalten.

Dies ist beispielsweise ersichtlich aus dem Vergleich von Ref.3 mit E1, Ref.4 mit E2, Ref.6 mit E7, Ref.7 mit E8, Ref.27 mit E13, Ref.28 mit E14, Ref.30 mit E19, Ref.31 mit E20.

Die Polyolkomponente **K1** umfasst mindestens ein alkoxyliertes Alkylendiamin mit einer OH-Zahl von 350 - 950 mg KOH/g **A3.** Bevorzugt hat das alkoxylierte Alkylendiamin **A3** eine OH-Zahl von 500 - 900, insbesondere 700 - 800, insbesondere 750 - 780 mg KOH/g.

Vorzugsweise handelt es sich um Alkylendiamine mit 2 - 6 C-Atomen, insbesondere 2 - 3 C-Atomen, besonders bevorzugt Ethylendiamin. Zur Herstellung der alkoxylierten Alkylendiamine werden bevorzugt Ethylenoxid und/oder 1,2-Propylenoxid eingesetzt.

Bevorzugt sind alkoxylierte Alkylendiamine ausgewählt aus der Liste bestehend aus N,N,N',N'-Tetrakis(2-hydroxyethyl)-ethylendiamin und N,N,N',N'-Tetrakis(2-hydroxypropyl)-ethylendiamin. Besonders bevorzugt ist N,N,N',N'-Tetrakis(2-hydroxypropyl)-ethylendiamin.

N,N,N',N'-Tetrakis(2-hydroxypropyl)-ethylendiamin ist beispielsweise erhältlich als Quadrol® L bei BASF SE, Deutschland.

Das Vorhandensein des mindestens einen alkoxylierten Alkylendiamins **A3** in der Polyolkomponente **K1** ist dies dahingehend von Vorteil, dass dadurch signifikant kürzere Offenzeiten erhalten werden. Weiter wird dadurch ein grösserer Unterschied zwischen der ersten Glasübergangstemperatur (Tg1) und der zweiten Glasübergangstemperatur (Tg2) erreicht. Zusätzlich werden höhere Werte für die zweite Glasübergangstemperatur (Tg2) erhalten.

Das Vorhandensein des mindestens einen alkoxylierten Alkylendiamins **A3** in der Polyolkomponente **K1** ist weiter dahingehend von Vorteil, dass dadurch höhere Werte für die Zugscherfestigkeit erhalten werden. Dies ist beispielsweise in Tabelle 7 ersichtlich aus dem Vergleich von Ref.22 mit E9 und Ref.13 mit E15.

Handelt es sich bei dem aromatischen Polyisocyanat um ein aromatisches Polyisocyanat B1-1, so werden zusätzlich höhere Werte für die Zugfestigkeit sowie die E-Moduli erhalten.

Dies ist beispielsweise ersichtlich aus dem Vergleich von Tabelle 1 mit Tabelle 3, respektive Tabelle 2 mit Tabelle 4.

Vorzugsweise umfasst die Polyolkomponente **K1** mindestens ein aliphatisches Triol **A4,** wobei es sich bei dem aliphatischen Triol **A4** um:
- 1,2,3-Propantriol und/oder
- 1,1,1-Trimethylolpropan und/oder
- Polyetherpolyole basierend auf 1,1,1-Trimethylolpropan mit einem Molekulargewicht von 170-500 g/mol,
   handelt.

Geeignete 1,2,3-Propantriole (auch Glycerin genannt) sind kommerziell erhältlich von der Firma ecoMotion GmbH, Deutschland.

Geeignete 1,1,1-Trimethylolpropane (auch Trimethylolpropan oder 2-(hydroxymethyl)-2-ethylpropan-1,3-diol genannt) sind beispielsweise auch kommerziell erhältlich von der Firma Perstorp AB, Schweden.

Vorzugsweise handelt es sich bei dem aliphatischen Triol **A4** um Polyetherpolyole basierend auf 1,1,1-Trimethylolpropan mit einem Molekulargewicht von 170-500 g/mol, insbesondere 175-400 g/mol, bevorzugt von 175-350 g/mol.

Vorzugsweise handelt es sich bei den Polyetherpolyolen basierend auf 1,1,1-Trimethylolpropan um alkoxyliertes 1,1,1-Trimethylolpropan, insbesondere ethoxyliertes oder propoxyliertes 1,1,1-Trimethylolpropan, am meisten bevorzugt um propoxyliertes 1,1,1-Trimethylolpropan.

Geeignete Polyetherpolyole basierend auf 1,1,1-Trimethylolpropan sind beispielsweise auch kommerziell erhältlich unter dem Handelsnamen Desmophen® 4011 T von Bayer Material Science, Deutschland oder unter dem Handelsnamen Lupranol® 3903 von BASF, Deutschland.

Weist die Polyolkomponente **K1** zusätzlich mindestens ein aliphatisches Triol **A4** auf, so ist dies dahingehend von Vorteil, dass dadurch signifikant längere Offenzeiten erhalten werden und höhere Werte für die Bruchdehnung erhalten werden. Dies ist insbesondere für grossflächige Reparaturen oder grossflächige Substratflächen vorteilhaft.

Dies ist beispielsweise ersichtlich aus dem Vergleich von Tabelle 1 mit Tabelle 5, respektive Tabelle 2 mit Tabelle 6.

Das Verhältnis der OH-Gruppen von **A1/A2** beträgt von 1 - 20. Unter dem vorgehend beschriebenen Verhältnis wird das molare Verhältnis erwähnter Gruppen verstanden.

Beträgt das Verhältnis weniger als 1 ist dies dahingehend von Nachteil, dass dadurch kurze Offenzeiten sowie tiefe Werte für die Zugfestigkeit sowie für die E-Moduli erhalten werden.

Dies ist beispielsweise ersichtlich aus dem Vergleich von Ref.5 mit E2-6, Ref.8 mit E8-12, Ref.29 mit E14-18, respektive Ref.32 mit E20-24.

Weiter ist ein Verhältnis weniger als 1 dahingehend von Nachteil, dass dadurch signifikant tiefere Werte für die Zugscherfestigkeit erhalten werden. Dies ist beispielsweise ersichtlich aus dem Vergleich von Ref.5 mit E3 in Tabelle 7.

Beträgt das Verhältnis von mehr als 20 ist dies dahingehend von Nachteil, dass dadurch ein geringerer Unterschied zwischen der ersten Glasübergangstemperatur (Tg1) und der zweiten Glasübergangstemperatur (Tg2) erreicht wird. Zusätzlich werden tiefere Werte für die zweite Glasübergangstemperatur (Tg2) erhalten.

Dies ist beispielsweise ersichtlich aus dem Vergleich von Ref.3 mit E1, Ref.4 mit E2, Ref.6 mit E7, Ref.7 mit E8, Ref.27 mit E13, Ref.28 mit E14, Ref.30 mit E19, Ref.31 mit E20.

Weiter ist ein Verhältnis von mehr als 20 dahingehend von Nachteil, dass dadurch tiefere Werte für die Zugscherfestigkeit erhalten werden. Dies ist beispielsweise ersichtlich aus dem Vergleich von Ref.4 mit E3 in Tabelle 7.

Vorzugsweise beträgt das Verhältnis 1-18, 1-15, 1-10, 1-8, insbesondere 1.5-7, 2-7, 2.5-6.5, besonders bevorzugt 3-6. Dies ist dahingehend von Vorteil, dass dadurch ein ausgewogenes Verhältnis von Offenzeit und hohen Werte für die Zugfestigkeit sowie die E-Moduli erhalten werden bei gleichzeitig hohen Werten für den Temperaturunterschied zwischen der ersten Glasübergangstemperatur (Tg1) und der zweiten Glasübergangstemperatur (Tg2).

Vorzugsweise beträgt das Verhältnis der OH-Gruppen von **(A1/A3)** von 0.15-0.5, insbesondere 0.2-0.45, 0.25-0.45, besonders bevorzugt 0.3-0.4. Unter dem vorgehend beschriebenen Verhältnis wird das molare Verhältnis erwähnter Gruppen verstanden.

Weiter ist es bevorzugt, wenn das Verhältnis der OH-Gruppen von **(A1+A2)/A4** von 0.75-1.2, insbesondere 0.8-1.1, 0.85-1.05, besonders bevorzugt 0.9-1.05, beträgt. Unter dem vorgehend beschriebenen Verhältnis wird das molare Verhältnis erwähnter Gruppen verstanden.

Weiter ist es bevorzugt, wenn das Verhältnis der OH-Gruppen von **A3/A4** von 0.3-3.3, insbesondere 0.5-3.0, 0.6-2.5, 0.7-2.0, 0.8-1.5, besonders bevorzugt 0.8-1.2, beträgt. Unter dem vorgehend beschriebenen Verhältnis wird das molare Verhältnis erwähnter Gruppen verstanden.

Weiter ist es bevorzugt, wenn das Verhältnis der OH-Gruppen von **(A1+A2)/(A3+** gegebenenfalls **A4)** ≤ 0.6 beträgt. Dies ist dahingehend von Vorteil, dass dadurch ein grösserer Unterschied zwischen der ersten Glasübergangstemperatur (Tg1) und der zweiten Glasübergangstemperatur (Tg2) erreicht wird. Weiter werden höhere Werte für die zweite Glasübergangstemperatur (Tg2) erhalten. Unter dem vorgehend beschriebenen Verhältnis wird das molare Verhältnis erwähnter Gruppen verstanden. Dies ist beispielsweise ersichtlich aus dem Vergleich von E1 mit E2-6, E7 mit E8-12, E13 mit E14-18, respektive E19 mit E20-24.

Handelt es sich bei dem aromatischen Polyisocyanat um ein aromatisches Polyisocyanat B1-1, so wird zusätzlich eine tiefere Temperatur für die erste Glasübergangstemperatur (Tg1) erhalten. Dies ist beispielsweise ersichtlich aus dem Vergleich von E1 mit E2-6, respektive E13 mit E14-18.

Die vorliegende Polyisocyanatkomponente **K2** umfasst mindestens ein aromatisches Polyisocyanat **B1.**

Geeignete aromatische Polyisocyanate **B1** sind insbesondere monomere Di- oder Triisocyanaten, sowie Oligomere, Polymere und Derivate von monomeren Di- oder Triisocyanaten, sowie beliebige Mischungen davon.

Geeignete aromatische monomere Di- oder Triisocyanate sind insbesondere 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)benzol, Tris-(4-isocyanatophenyl)methan und Tris-(4-isocyanatophenyl)thiophosphat. Bevorzugte aromatische monomere Di- oder Triisocyanate sind abgeleitet von MDI und/oder TDI, insbesondere von MDI.

Geeignete Oligomere, Polymere und Derivate der genannten monomeren Di- und Triisocyanate sind insbesondere abgeleitet von MDI und TDI. Davon insbesondere geeignet sind kommerziell erhältliche Typen, TDI-Oligomere wie Desmodur® IL (von Bayer); weiterhin geeeignet sind bei Raumtemperatur flüssige Formen von MDI (sogenanntes "modifiziertes MDI"), welche Gemische von MDI mit MDI-Derivaten, wie insbesondere MDI-Carbodiimiden oder MDI-Uretoniminen darstellen, bekannt unter Handelsnamen wie Desmodur® CD, Desmodur® PF, Desmodur® PC (alle von Bayer), sowie Gemische aus MDI und MDI-Homologen (polymeres MDI oder PMDI), erhältlich unter Handelsnamen wie Desmodur® VL, Desmodur® VL50, Desmodur® VL R10, Desmodur® VL R20, Desmodur® VH 20 N und Desmodur® VKS 20F (alle von Bayer), Isonate® M 309, Voranate® M 229 und Voranate® M 580 (alle von Dow) oder Lupranat® M 10 R (von BASF). Die vorgenannten oligomeren Polyisocyanate stellen in der Praxis üblicherweise Gemische von Substanzen mit unterschiedlichen Oligomerisierungsgraden und/oder chemischen Strukturen dar. Vorzugsweise weisen sie eine mittlere NCO-Funktionalität von 2.1 bis 4.0 auf, vorzugsweise 2.1 bis 3.0, insbesondere 2.1 bis 2.6.

Bevorzugt sind als aromatische Polyisocyanate **B1** monomeres MDI oder Oligomere, Polymere und Derivate abgeleitet von MDI, insbesondere mit einer mittleren NCO-Funktionalität von 2.0 - 4.0, vorzugsweise 2.0 - 3.0, insbesondere 2.1 - 2.6.

Besonders vorteilhaft handelt es sich um Oligomere, Polymere und Derivate abgeleitet von MDI, insbesondere um Polymere abgeleitet von MDI, insbesondere mit einer mittleren NCO-Funktionalität von 2.1 - 2.6.

Handelt es sich um Oligomere, Polymere und Derivate abgeleitet von MDI mit einer mittleren NCO-Funktionalität von 2.4 - 2.6 kann es dahingehend von Vorteil sein, dass dadurch besonders hohe Werte für den Temperaturunterschied zwischen dem ersten und dem zweiten Tg erhalten werden. Dies ist beispielsweise im Vergleich von Tabelle 1 mit Tabelle 3 ersichtlich.

Handelt es sich um Oligomere, Polymere und Derivate abgeleitet von MDI mit einer mittleren NCO-Funktionalität von 2.1 - 2.3 kann es dahingehend von Vorteil sein, dass dadurch höhere Werte für die E-moduli erhalten werden. Dies ist beispielsweise ersichtlich aus dem Vergleich von Tabelle 1 mit Tabelle 2, respektive Tabelle 5 mit Tabelle 6.

Insbesondere handelt es sich um Polymere abgeleitet von MDI, insbesondere mit einem Gewichtsanteil von Polymeren abgeleitet von MDI von 20 - 90 Gew.-%, bezogen auf das Gesamtgewicht des aromatischen Polyisocyanats **B1.**

Weiter ist es vorteilhaft, wenn das aromatische Polyisocyanat **B1** ein mittleres Molekulargewicht von 160 - 2000 g/mol, insbesondere 500 - 1500 g/mol aufweist.

Es ist weiter vorteilhaft, wenn die Summe der NCO-Gruppen, welche nicht von **B1** herrühren, ≤5%, insbesondere ≤2%, insbesondere bevorzugt ≤1%, am meisten bevorzugt ≤0.5%, beträgt, bezogen auf die Summe aller NCO -Gruppen der zweikomponentigen Polyurethanzusammensetzung.

Vorzugsweise beträgt der Anteil des aromatischen Polyisocyanats **B1** ≥ 90 Gew.-%, insbesondere ≥ 95 Gew.-%, insbesondere bevorzugt ≥99 Gew.-%, bezogen auf das Gesamtgewicht der Polyisocyanatkomponente **K2.**

Vorzugsweise beträgt das Verhältnis aller NCO-Gruppen der aromatischen Polyisocyanate **B1** : aller OH-Gruppen der Polyolkomponente **K1** beträgt = 0.9 : 1 - 1.2 : 1, insbesondere 1.0 : 1 - 1.1 : 1.

Vorzugsweise beträgt das Verhältnis aller NCO-Gruppen der aromatischen Polyisocyanate B1 : aller OH-Gruppen der Summe von **(A1 + A2 + A3 +** gegebenenfalls **A4)** = 0.9 : 1 - 1.2 : 1, insbesondere 1.0 : 1 - 1.1 : 1.

Unter den vorgehend beschriebenen Verhältnissen wird das molare Verhältnis erwähnter Gruppen verstanden.

Weiter kann es bevorzugt sein, wenn bei der zweikomponentigen Polyurethanzusammensetzung die Summe aller OH-Gruppen von (**A1 + A2 + A3** + gegebenenfalls **A4**) ≥60%, ≥70%, insbesondere ≥80%, insbesondere bevorzugt ≥90%, ≥95%, am meisten bevorzugt ≥98%, ≥99%, der Summe aller OH-Gruppen der zweikomponentigen Polyurethanzusammensetzung beträgt.

Vorzugsweise ist die zweikomponentige Polyurethanzusammensetzung im Wesentlichen frei von OH-Gruppen, welche nicht von (**A1 + A2 + A3 +** gegebenenfalls **A4**) herrühren. Unter dem Begriff "im Wesentlichen frei" wird in diesem Fall verstanden, dass die Summe der OH-Gruppen, welche nicht von (**A1 + A2 + A3 +** gegebenenfalls **A4**) herrühren, ≤15%, insbesondere ≤10%, insbesondere bevorzugt ≤5%, am meisten bevorzugt ≤2%, beträgt, bezogen auf die Summe aller OH-Gruppen der zweikomponentigen Polyurethanzusammensetzung.

Weiterhin kann die zweikomponentige Polyurethanzusammensetzung Katalysatoren enthalten, die die Reaktion von Hydroxylgruppen mit Isocyanatgruppen beschleunigen, insbesondere Zinn-, Zink-, Zirkonium- und Wismut-organische Metallkatalysatoren, zum Beispiel Dibutylzinndilaurat, oder tertiäre Amine, Amidine oder Guanidine, zum Beispiel 1,4-Diazabicyclo[2.2.2]octan (DABCO) oder 1,8-Diazabicyclo[5.4.0]undec-7-en (DBU). Zur Erzielung einer Wärmeaktivierung können insbesondere die tertiären Amine, Amidine oder Guanidine mit Phenol oder Carbonsäuren, insbesondere phenolischen oder sonstigen aromatischen Carbonsäuren, reversibel ein Salz oder einen Komplex bilden, welches bei Erhöhung der Temperatur zersetzt wird.

Vorzugsweise weist die zweikomponentige Polyurethanzusammensetzung 0 bis 2 Gewichts-%, insbesondere bevorzugt 0 bis 0.5 Gewichts-%, weniger als 0.2 Gewichts-%, besonders bevorzugt weniger als 0.1 Gewichts-%, am meisten bevorzugt keine der vorgenannten Katalysatoren für die Beschleunigung der Reaktion von Hydroxylgruppen mit Isocyanatgruppen auf.

Als weitere Bestandteile bevorzugt sind anorganische und organische Füllstoffe, wie insbesondere natürliche, gemahlene oder gefällte Calciumcarbonate, welche gegebenenfalls mit Fettsäuren, insbesondere Stearinsäure, beschichtet sind, Baryt (Schwerspat), Talke, Dolomite, Wollastonite, Kaoline, calcinierte Kaoline, Glimmer (Kalium-Aluminium-Silikat), Molekularsiebe, Aluminiumoxide, Aluminiumhydroxide, Magnesiumhydroxid, Kieselsäuren inklusive hochdisperse Kieselsäuren aus Pyrolyseprozessen, industriell hergestellte Russe, Graphit, Metallpulver wie Aluminium oder Stahl, PVC-Pulver oder Hohlkugeln.

Die Zugabe von Füllstoffen ist, insbesondere wenn es sich bei der Polyurethanzusammensetzung um einen Klebstoff handelt, dahingehend von Vorteil, dass dadurch die Festigkeit der ausgehärteten Polyurethanzusammensetzung erhöht wird.

Es kann vorteilhaft sein, wenn die Polyurethanzusammensetzung mindestens einen Füllstoff ausgewählt aus der Gruppe bestehend aus Calciumcarbonat, Kaolin, Baryt, Talk, Dolomit, Wollastonit, Kaolin, calciniertes Kaolin und Mica enthält.

Als weitere Bestandteile können weiterhin insbesondere Lösungsmittel, Weichmacher und/oder Kettenverlängerer, Pigmente, Rheologiemodifizierer wie insbesondere amorphe hydrophobe Kieselsäuren, Trocknungsmittel wie insbesondere Zeolithe, Haftvermittler wie insbesondere Trialkoxysilane, Stabilisatoren gegen Oxidation, Wärme, Licht- und UV-Strahlung, flammhemmende Substanzen, sowie oberflächenaktive Substanzen, insbesondere Netzmittel und Entschäumer, vorhanden sein.

Die Komponenten **K1** und **K2** werden vorteilhaft derart formuliert, dass das Volumenverhältnis von Komponente **K1** und **K2** zwischen 1:3 und 3:1, insbesondere zwischen 1:2 und 2:1, beträgt. Besonders bevorzugt beträgt dieses Verhältnis in etwa 1:1.

Eine bevorzugte zweikomponentige Polyurethanzusammensetzung besteht: aus einer Polyolkomponente **K1,** welche:
- 70 bis 95 Gewichts-%, bevorzugt 80 bis 95 Gewichts-%, insbesondere 85 bis 95 Gewichts-%, der Summe (**A1 + A2 + A3 +** gegebenenfalls **A4**); und
- 5 bis 30 Gewichts-%, bevorzugt 5 bis 20 Gewichts-%, insbesondere 5 bis 10 Gewichts-%, Füllstoffe, insbesondere Füllstoffe ausgewählt aus der Gruppe bestehend aus Calciumcarbonat, Kaolin, Baryt, Talk, Dolomit, Wollastonit, Kaolin, calciniertes Kaolin, und Mica, besonders bevorzugt Calciumcarbonat und Rheologiemodifizierer wie insbesondere hydrophobe amorphe Kieselsäuren; und
- 0 bis 5 Gewichts-%, bevorzugt 1 bis 3 Gewichts-%,Trocknungsmittel (insbesondere Zeolithe);
bezogen auf das Gesamtgewicht der Polyolkomponente **K1,** enthält, insbesondere daraus besteht,
und aus einer Polyisocyanatkomponente **K2,** welche:
- einen Anteil des aromatischen Polyisocyanats **B1** ≥90 Gew.-%, insbesondere ≥95 Gew.-%, insbesondere bevorzugt ≥99 Gew.-%, bezogen auf das Gesamtgewicht der Polyisocyanatkomponente **K2,** aufweist.
Eine solche Zusammensetzung ist insbesondere als Vergussmasse geeignet.

Eine weitere bevorzugte zweikomponentige Polyurethanzusammensetzung besteht aus einer Polyolkomponente **K1,** welche:
- 30 bis 70 Gewichts-%, bevorzugt 40 bis 60 Gewichts-%, insbesondere 45 bis 55 Gewichts-%, der Summe (**A1 + A2 + A3 +** gegebenenfalls **A4**); und
- 20 bis 60 Gewichts-%, bevorzugt 30 bis 50 Gewichts-%, insbesondere 35 bis 45 Gewichts-%, Füllstoffe, insbesondere Füllstoffe ausgewählt aus der Gruppe bestehend aus Calciumcarbonat, Kaolin, Baryt, Talk, Dolomit, Wollastonit, Kaolin, calciniertes Kaolin, und Mica, besonders bevorzugt Calciumcarbonat und Rheologiemodifizierer wie insbesondere hydrophobe amorphe Kieselsäuren; und
- 0 bis 5 Gewichts-%, bevorzugt 0.5 bis 3 Gewichts-%, insbesondere bevorzugt 1 bis 2 Gewichts-%, Trocknungsmittel (insbesondere Zeolithe);
bezogen auf das Gesamtgewicht der Polyolkomponente **K1,** enthält, insbesondere daraus besteht,
und aus einer Polyisocyanatkomponente **K2,** welche:
- einen Anteil des aromatischen Polyisocyanats **B1** ≥90 Gew.-%, insbesondere ≥95 Gew.-%, insbesondere bevorzugt ≥99 Gew.-%, bezogen auf das Gesamtgewicht der Polyisocyanatkomponente **K2,** aufweist.
Eine solche Zusammensetzung ist insbesondere als Klebstoff geeignet.

Eine weitere bevorzugte zweikomponentige Polyurethanzusammensetzung besteht aus einer Polyolkomponente **K1,** welche:
- 90 bis 100 Gewichts-%, bevorzugt 95 bis 97 Gewichts-%, der Summe (**A1 + A2 + A3** + gegebenenfalls **A4**); und
- 0 bis 5 Gewichts-%, bevorzugt 0 bis 2 Gewichts-%, insbesondere 0 bis 0.5 Gewichts-%, besonders bevorzugt weniger als 0.1 Gewichtsprozent, am meisten bevorzugt keine Füllstoffe, insbesondere Füllstoffe ausgewählt aus der Gruppe bestehend aus Calciumcarbonat, Kaolin, Baryt, Talk, Dolomit, Wollastonit, Kaolin, calciniertes Kaolin, und Mica, besonders bevorzugt Calciumcarbonat und Rheologiemodifizierer wie insbesondere hydrophobe amorphe Kieselsäuren; und
- 0 bis 5 Gewichts-%, bevorzugt 0.5 bis 3 Gewichts-%, insbesondere bevorzugt 1 bis 2 Gewichts-%, Trocknungsmittel (insbesondere Zeolithe);
bezogen auf das Gesamtgewicht der Polyolkomponente **K1,** enthält, insbesondere daraus besteht, und aus einer Polyisocyanatkomponente **K2,** welche:
- einen Anteil des aromatischen Polyisocyanats **B1** ≥90 Gew.-%, insbesondere ≥95 Gew.-%, insbesondere bevorzugt ≥99 Gew.-%, bezogen auf das Gesamtgewicht der Polyisocyanatkomponente **K2,** aufweist.

Eine solche Zusammensetzung ist insbesondere als Infusionsharz geeignet.

Die Herstellung der beiden Komponenten erfolgt getrennt voneinander und, zumindest für die zweite Komponente, vorzugsweise unter Ausschluss von Feuchtigkeit. Beide Komponenten werden typischerweise jeweils in einem eigenen Gebinde gelagert. Die weiteren Bestandteile der Polyurethanzusammensetzung können als Bestandteil der ersten oder der zweiten Komponente vorhanden sein, wobei gegenüber Isocyanatgruppen reaktive weitere Bestandteile bevorzugt ein Bestandteil der ersten Komponente sind. Ein geeignetes Gebinde zum Lagern der jeweiligen Komponente ist insbesondere ein Fass, ein Hobbock, ein Beutel, ein Eimer, eine Büchse, eine Kartusche oder eine Tube. Die Komponenten sind beide lagerstabil, das heisst, dass sie vor ihrer Anwendung während mehrerer Monate bis zu einem Jahr und länger aufbewahrt werden können, ohne dass sie sich in ihren jeweiligen Eigenschaften in einem für ihren Gebrauch relevanten Ausmass verändern.

Die beiden Komponenten werden vor dem Vermischen der Zusammensetzung getrennt voneinander gelagert und erst bei oder unmittelbar vor der Anwendung miteinander vermischt. Sie sind vorteilhaft in einer Verpackung, welche aus zwei voneinander getrennten Kammern besteht, vorhanden.

In einem weiteren Aspekt umfasst die Erfindung eine Packung bestehend aus einer Verpackung mit zwei voneinander getrennten Kammern, welche jeweils die erste Komponente beziehungsweise die zweite Komponente der Zusammensetzung enthält.

Das Mischen erfolgt typischerweise über Statikmischer oder mit Hilfe von dynamischen Mischern. Beim Mischen ist darauf zu achten, dass die beiden Komponenten möglichst homogen vermischt werden. Werden die zwei Komponenten unvollständig gemischt, treten lokale Abweichungen vom vorteilhaften Mischungsverhältnis auf, was sich in einer Verschlechterung der mechanischen Eigenschaften auswirken kann.

Beim Kontakt der ersten Komponente mit Isocyanatgruppen der zweiten Komponente beginnt die Aushärtung durch chemische Reaktion. Dabei reagieren die vorhandenen Hydroxylgruppen und gegebenenfalls vorhandene weitere gegenüber Isocyanatgruppen reaktive Substanzen mit vorhandenen Isocyanatgruppen. Überschüssige Isocyanatgruppen reagieren mit vorhandener Feuchtigkeit. Als Resultat dieser Reaktionen härtet die Polyurethanzusammensetzung zu einem festen Material aus. Dieser Vorgang wird auch als Vernetzung bezeichnet.

Ein weiterer Gegenstand der Erfindung ist somit auch eine ausgehärtete Polyurethanzusammensetzung, erhalten aus der Aushärtung der Polyurethanzusammensetzung wie im vorliegenden Dokument beschrieben.

Die beschriebene zweikomponentige Polyurethanzusammensetzung ist vorteilhaft verwendbar als struktureller Klebstoff, als Vergussmasse oder als Infusionsharz.

Die Erfindung betrifft somit auch ein Verfahren zum Verkleben von einem ersten Substrat mit einem zweiten Substrat, welches die Schritte umfasst:
- Mischen der vorgängig beschriebenen Polyolkomponente **K1** und Polyisocyanatkomponente **K2,**
- Applizieren der vermischten Polyurethanzusammensetzung auf mindestens eine der zu verklebenden Substratoberflächen,
- Fügen der zu verklebenden Substrate innerhalb der Offenzeit,
- Aushärten der Polyurethanzusammensetzung.
   Dabei können die beiden Substrate aus dem gleichen oder unterschiedlichen Materialien bestehen.

Die Erfindung betrifft somit weiterhin auch ein Verfahren zum Verfüllen von Fugen und Spalten zwischen zwei Substraten, welches die Schritte umfasst:
- Mischen der vorgängig beschriebenen Polyolkomponente **K1** und Polyisocyanatkomponente **K2,**
- Applizieren der vermischten Polyurethanzusammensetzung in die Fuge oder den Spalt,
- Aushärten der Polyurethanzusammensetzung.

In diesen Verfahren zum Verkleben oder zum Verfüllen von Fugen und Spalten sind geeignete Substrate insbesondere
- Glas, Glaskeramik, Glasmineralfasermatten, Glasfasergewebe;
- Metalle und Legierungen, wie Aluminium, Eisen, Stahl und Buntmetalle, sowie oberflächenveredelte Metalle und Legierungen, wie verzinkte oder verchromte Metalle;
- beschichtete und lackierte Substrate, wie pulverbeschichtete Metalle oder Legierungen und lackierte Bleche;
- Kunststoffe, wie Polyvinylchlorid (Hart- und Weich-PVC), Acrylonitril-Butadien-Styrol-Copolymere (ABS), Polycarbonat (PC), Polyamid (PA), Poly(methylmethacrylat) (PMMA), Polyester, Epoxidharze insbesondere Thermosets auf Epoxybasis, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), wobei die Kunststoffe bevorzugt mittels Plasma, Corona oder Beflammen oberflächenbehandelt sein können;
- Faserverstärkte Kunststoffe, wie kohlefaserverstärkte Kunststoffe (CFK), glasfaserverstärkte Kunststoffe (GFK) und Sheet Moulding Compounds (SMC);
- Holz, mit Harzen, beispielsweise Phenol-, Melamin- oder Epoxidharzen, gebundene Holzwerkstoffe, Harz-Textil-Verbundwerkstoffe und weitere sogenannte Polymer-Composites; sowie
- Beton, Mörtel, Ziegel, Gips und Natursteine wie Granit, Kalk- und Standstein oder Marmor.

In diesen Verfahren ist eines oder beide Substrate bevorzugt ein Metall oder eine Glaskeramik oder ein Glas oder ein glasfaserverstärkter Kunststoff oder ein kohlefaserverstärkter Kunststoff oder ein Thermoset auf Epoxybasis.

Die Substrate können bei Bedarf vor dem Applizieren der Zusammensetzung vorbehandelt werden. Derartige Vorbehandlungen umfassen insbesondere physikalische und/oder chemische Reinigungsverfahren, sowie das Aufbringen eines Haftvermittlers, einer Haftvermittlerlösung oder eines Primers.

Aus dem beschriebenen Verfahren zum Verkleben entsteht ein Artikel, bei welchem die Zusammensetzung zwei Substrate miteinander verbindet.

Dieser Artikel ist insbesondere ein Sandwichelement einer Leichtbaustruktur, ein Bauwerk, beispielsweise eine Brücke, ein industrielles Gut oder ein Konsumgut, insbesondere ein Fenster, ein Rotorblatt einer Windkraftanlage oder ein Transportmittel, insbesondere ein Fahrzeug, bevorzugt ein Automobil, ein Bus, ein Lastkraftwagen, ein Schienenfahrzeug oder ein Schiff, sowie ein Flugzeug oder ein Helikopter; oder ein Anbauteil eines solchen Artikels.

Die beschriebene zweikomponentige Polyurethanzusammensetzung zeichnet sich unter anderem dadurch aus, dass sie eine schwach ausgeprägte Abhängigkeit der mechanischen Eigenschaften, insbesondere der Zugfestigkeit und der E-moduli, von der Temperatur aufweisen. Aufgrund dieser Eigenschaften ist sie ganz besonders geeignet als struktureller Klebstoff für Verbindungen, welche unter Umgebungstemperaturen im Freien beansprucht werden.

Ein weiterer Gegenstand der Erfindung ist somit auch die Verwendung der beschriebenen Polyurethanzusammensetzung als struktureller Klebstoff zum Verkleben von zwei Substraten.

Ebenfalls vorteilhaft verwendbar ist die beschriebene Polyurethanzusammensetzung als Vergussmasse, insbesondere als Vergussmasse für das Verfüllen von Spalten und Fugen, zu Reparaturzwecken, als Ballastausgleichsmasse oder zum Schutz von elektronischen Bauteilen.

Die Polyurethanzusammensetzung wird weiter vorzugsweise als Vergussmasse, insbesondere als Elektrovergussmasse, eingesetzt. In einem weiteren Aspekt umfasst die Erfindung daher die Verwendung einer zweikomponentigen Polyurethanzusammensetzung als Vergussmasse, insbesondere als Elektrovergussmasse.

Typische Bespiele für Anwendungen der erfindungsgemässen Polyurethanzusammensetzungen finden sich auf dem Gebiet der Elektrovergussmassen.

In einem weiteren Aspekt umfasst die Erfindung daher ein Verfahren zum Verfüllen von Fugen und Spalten in einem Substrat umfassend die Schritte
a) Mischen der Polyolkomponente (**K1**) und der Polyisocyanatkomponente (**K2**) einer zweikomponentigen Polyurethanzusammensetzung wie sie vorgehend beschrieben ist,
b) Applizieren der vermischten Polyurethanzusammensetzung in die zu verfüllende Fuge oder den zu verfüllenden Spalt des Substrates,
c) Aushärten der Polyurethanzusammensetzung in der Fuge oder im Spalt.

Als Substrate besonders geeignet sind Metall, Kunststoff, Holz, Glas, Keramik und faserverstärkte Kunststoffe, insbesondere Metall und faserverstärkte Kunststoffe.

In einem weiteren Aspekt umfasst die Erfindung daher auch einen verfüllten Artikel, welcher nach dem vorgehend beschriebenen Verfahren verfüllt wurde.

Ein weiterer Gegenstand der Erfindung ist auch die Verwendung der beschriebenen Polyurethanzusammensetzung als Infusionsharz, insbesondere zur Herstellung von faserverstärkten Verbundwerkstoffteilen, besonders bevorzugt in Infusionsverfahren. Für die Verwendung als Infusionsharz, insbesondere als Infusionsharz für Verbundbauteile, weist die zweikomponentige Polyurethanzusammensetzung (2K-PU-Zusammensetzung) vorzugsweise eine Viskosität in gemischter Form von 500 bis 5000 mPas auf (gemessen mit Brookfield RTV, Drehzahl 10 U/min, Kegel/Platte, CP 50/1), gemessen bei einer Temperatur von 20°C. Insbesondere soll die Viskosität von 1000 bis 2000 mPas betragen, gemessen bei 20°C. Die Viskosität soll unmittelbar nach dem Mischen bestimmt werden, beispielsweise bis zu 1 min nach dem Mischen, durch die einsetzende Vernetzungsreaktion nimmt sie stetig zu.

Vorzugsweise wird eine zweikomponentige Polyurethanzusammensetzung mit einer relativ kurzen Offenzeit eingesetzt. Diese soll vorzugsweise 2-30 min, insbesondere 5-15 min, betragen. Als Mass für die Offenzeit kann die "Gelation Time [min]" bestimmt werden anhand der Zeit bis zum Eintreten der Gelierung, wie nachstehend in den Beispielen beschrieben.

Ein weiterer Gegenstand der Erfindung ist auch ein Verfahren zum Herstellen von faserverstärkten Verbundwerkstoffteilen und einer vorgehend beschriebenen zweikomponentigen Polyurethanzusammensetzung, dadurch gekennzeichnet, dass die Polyolkomponente **K1** und die Polyisocyanatkomponente **K2** gemischt werden und danach, insbesondere weniger als 5 min nach dem Vermischen, vorzugsweise unmittelbar nach dem Vermischen, unter Vakuum und/oder Druck in eine die Fasern enthaltende Form eingebracht wird.

Das Mischen der Polyolkomponente **K1** mit der Polyisocyanatkomponente **K2** kann batch-weise oder kontinuierlich, vorzugsweise kontinuierlich, erfolgen.

Überraschenderweise wurde gefunden, dass die erfindungsgemässe Zusammensetzung besonders beständig gegenüber Schäumen durch die Reaktion von Isocyanat mit in der Polyolkomponente **K1** verbleibenden Restfeuchtigkeit ist. Alle ausgehärteten erfindungsgemässen Zusammensetzungen in den Tabellen 1, 2, 5 und 6 wiesen keinerlei Blasenbildung auf. Daher kann auf eine Trocknung, typischerweise durch Vakuum, der Polyolkomponente **K1** verzichtet werden, was verfahrenstechnisch ein grosser Vorteil ist. Es kann daher vorteilhaft sein, wenn an die Polyolkomponente **K1** weniger als 1 Tag, vorzugsweise weniger als 5 h, vor dem Vermischen kein Vakuum angelegt wird, insbesondere von weniger als 200 mbar, insbesondere weniger als 100 mbar, insbesondere weniger als 50 mbar, bevorzugt 20 - 5 mbar, für mehr als 10 min, insbesondere mehr als 30 min, vorzugsweise von 30 - 120 min. Es kann weiter vorteilhaft sein, wenn an die Mischung der Polyolkomponente **K1** und der Polyisocyanatkomponente **K2** vor dem Einbringen in die Form kein Vakuum angelegt wird, insbesondere von weniger als 200 mbar, insbesondere weniger als 100 mbar, insbesondere weniger als 50 mbar, bevorzugt 20 - 5 mbar, für mehr als 1 min, insbesondere mehr als 10 min, vorzugsweise von 10 - 30 min.

Überraschenderweise wurde gefunden, dass die erfindungsgemässen Zusammensetzungen besonders beständig gegenüber Schäumen durch eine Reaktion der Isocyanatgruppen mit verbleibender Restfeuchtigkeit in dem Fasermaterial, insbesondere Glasfasern ist. Daher kann bei der Verwendung der erfindungsgemässen Zusammensetzungen auf eine Trocknung der Fasern, insbesondere durch Erwärmen und/oder Vakuum, verzichtet werden, was ein grosser verfahrenstechnischer Vorteil ist.

Es kann weiter vorteilhaft sein, wenn die Fasern weniger als 24 h, vorzugsweise weniger als 12 h, insbesondere weniger als 6 h, vor dem Einbringen der Mischung der Polyolkomponente **K1** und der Polyisocyanatkomponente **K2** in die die Fasern enthaltende Form, nicht getrocknet werden, insbesondere nicht getrocknet werden durch Anlegen von Vakuum, insbesondere von weniger als 100 mbar, insbesondere weniger als 50 mbar, bevorzugt 20 - 1 mbar für mehr als 60 min, insbesondere mehr als 120 min, vorzugsweise von 1 - 12 h, insbesondere bevorzugt 2 - 8 h, und/oder Erwärmen für mehr als 60 min, vorzugsweise mehr als 120 min, insbesondere bevorzugt für 1 - 12 h, insbesondere bevorzugt 2 - 8 h, auf eine Temperatur über 50°C, insbesondere über 55°C, besonders bevorzugt auf eine Temperatur von 60 - 80°C.

Als Fasern im erfindungsgemässen Verfahren sind bekannte hochfeste Fasern geeignet. Vorzugsweise sind die Fasern ausgewählt aus der Gruppe bestehend aus Naturfasern, Glasfasern, Kohlefasern, Kunststofffasern, Keramikfasern und Metallfasern, insbesondere Glasfasern und Kohlefasern, besonders bevorzugt Glasfasern.

Bevorzugt werden diese Fasern als Matten, Gewebe und Gelege, bevorzugt als Gewebe, insbesondere bevorzugt als Gewebe bestehend aus Bündeln von Endlosfasern, insbesondere Endlosfasern aus Glas, eingesetzt.

Ein weiterer Gegenstand der Erfindung ist auch ein Faserverbundwerkstoff erhalten aus dem erfindungsgemässen Verfahren sowie ein Faserverbundwerkstoff bestehend aus Fasern und einer vorgehend beschriebenen ausgehärteten zweikomponentigen Polyurethanzusammensetzung. Vorzugsweise sind die Fasern in der zweikomponentigen Polyurethanzusammensetzung eingebettet.

Wird die zweikomponentige Polyurethanzusammensetzung als Klebstoff oder Infusionsharz eingesetzt, weist die ausgehärtete Zusammensetzung vorzugsweise folgende Eigenschaften auf (gemäss den nachfolgend im Beispielteil verwendeten Messverfahren/Messbedingungen/ Aushärtungsbedingungen):

| | |
|---|---|
| Zugfestigkeit (TS) [MPa] | >7, >10, insbesondere >12, >15, >18, >20 |
| Bruchdehnung (EB) [%] | 20-150, 30-120, 40-120, 50-120, insbesondere 60-120 |
| E-modul 0.05-0.25% [MPa] | 130-1000, 200-1000, 300-850, 350-750, insbesondere 400-750 |
| Zugscherfestigkeit (LSS) bei RT [MPa] | >8, >10, insbesondere >12 |
| Zugscherfestigkeit (LSS) bei 80°C [MPa] | >3, >4, insbesondere >5, >6 |
| 1.Tg [°C] | -30 bis -65, insbesondere -40 bis -65, -45 bis -65 |
| 2.Tg [°C] | >65, >70, >80, >90, insbesondere >100, >120, >140, >150, und bevorzugt <200 |
| Gelation Time (GT) [min] | >2, >3, insbesondere >5, >10, >15 Minuten, vorzugsweise < 240, <120, <90, insbesondere < 60 Minuten |
| Aushärtung | Keine Blasenbildung bei einer Aushärtung bei einer Temperatur zwischen 0 °C und 80°C, insbesondere bei Raumtemperatur. |

### Beispiele

**verwendete Substanzen:**

| | |
|---|---|
| A1 | Priplast® 1837, bei Raumtemperatur flüssiges Polyesterdiol basierend auf Dimerfettsäuren von C₁₄-C₂₂-Fettsäuren, Dimersäuregehalt von mehr als 95%, mittleres Molekulargewicht ca. 1000 g/mol, OH-Zahl 110 mg KOH/g (Croda PLC, UK). |
| A1 Ref. | Priplast® 1838, bei Raumtemperatur flüssiges Polyesterdiol basierend auf Dimerfettsäuren von C₁₄-C₂₂-Fettsäuren, Dimersäuregehalt von mehr als 95%, mittleres Molekulargewicht ca. 2000 g/mol, OH-Zahl 56 mg KOH/g (Croda PLC, UK). |
| A2 | Polybd 45 HTLO, Polybutadienpolyol mit primären OH-Gruppen, OH-Funktionalität 2.4-2.6, mittleres Molekulargewicht ca. 2800 g/mol, OH-Zahl 48 mg KOH/g (Total Cray Valley, USA) |
| A3 | Quadrol, N,N,N',N'-Tetrakis(2-hydroxypropyl)-ethylendiamin, OH-Zahl 770 mg KOH/g, Sigma Aldrich |
| A4 | Desmophen® 4011 T, OH-Zahl von 550 ± 25 mg KOH/g, Molekulargewicht von ca. 300±20 g/mol, Bayer Material Science, Deutschland |
| Molsieb | Molekularsieb, Zeolith (Sylosiv® A3 von W. R. Grace & Co., USA) |
| B1-1 VL | Desmodur VL, polymeres MDI, mittlere NCO-Funktionalität von 2.5, Desmodur® VL, Covestro AG, Deutschland |
| B1-2 CD | Desmodur CD, modifiziertes Diphenylmethandiisocyanat enthaltend MDI-Carbodiimid-Addukte, mittlere NCO-Funktionalität von 2.2, NCO-Gehalt 29.4 Gewichts-%, Isonate® M 143 von Dow |

### Herstellung von Polyurethanzusammensetzungen

Für jede Zusammensetzung wurden die in den Tabellen 1-6 angegebenen Inhaltsstoffe in den angegebenen Mengen (in Gewichtsteilen) der Polyolkomponente **K1** mittels eines Vakuumdissolvers unter Feuchtigkeitsausschluss zu einer homogenen Paste verarbeitet und aufbewahrt. Ebenso wurden die in der Tabelle 1 angegebenen Inhaltsstoffe der Polyisocyanatkomponente **K2** verarbeitet und aufbewahrt. Anschliessend wurden die beiden Komponenten mittels eines SpeedMixers® (DAC 150 FV, Hauschild) während 30 Sekunden zu einer homogenen Paste verarbeitet (Verhältnis aller NCO-Gruppen **B1** : aller OH-Gruppen der Polyolkomponente **K1** jeweils = 1.10) und diese unverzüglich folgendermassen geprüft:
Zur Bestimmung der mechanischen Eigenschaften wurde der Klebstoff in Hantelform gemäss ISO 527, Teil 2, 1B, gebracht und während 7 Tagen im Normklima (23°C, 50% relative Feuchtigkeit) gelagert bzw. ausgehärtet. Danach wurde bei Raumtemperatur das Elastizitätsmodul im Bereich von 0.05 bis 0.25% Dehnung ("**E-Modul 1",** "Em 0.05-0.25%"), das Elastizitätsmodul im Bereich von 0.5 bis 5% Dehnung ("**E-Modul 2",** "Em 0.5-5%"), die **Zugfestigkeit** (tensile strength, "TS") und die **Bruchdehnung** (elongation at break, "EB") der so hergestellten Probekörper gemäss ISO 527 auf einer Zwick Z020 Zugprüfmaschine bei einer Prüfgeschwindigkeit von 10 mm/ min gemessen.

Die **Glasübergangstemperatur,** in den Tabellen abgekürzt mit **T_{g},** wurde bestimmt anhand von DMTA-Messungen an streifenförmigen Proben (Höhe 2-3 mm, Breite 2-3 mm, Länge 8.5 mm), welche während 7 Tagen bei 23°C gelagert bzw. ausgehärtet wurden, mit einem Mettler DMA/SDTA 861 e Gerät. Die Messbedingungen waren: Messung im Zugmodus, 10 Hz Anregungsfrequenz und Aufheizrate 5 K/min. Die Proben wurden auf -70°C abgekühlt und unter Bestimmung des komplexen Elastizitatsmoduls **E*** [MPa] auf 200°C erwärmt, wobei ein Maximum in der Kurve für den Verlustwinkel "tan δ" als T_{g}-Wert abgelesen wurde.

Die Resultate sind in den Tabellen 1-6 angegeben.

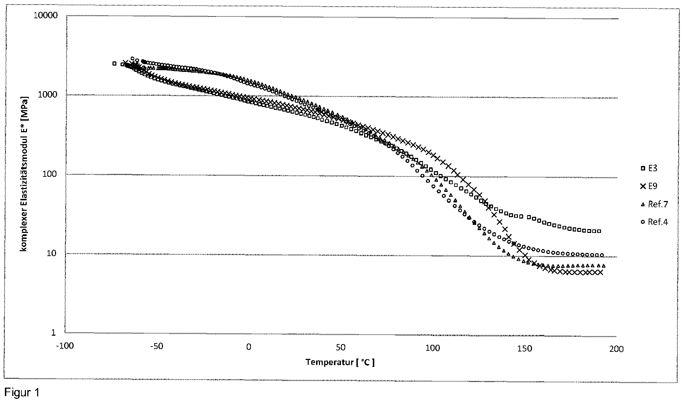

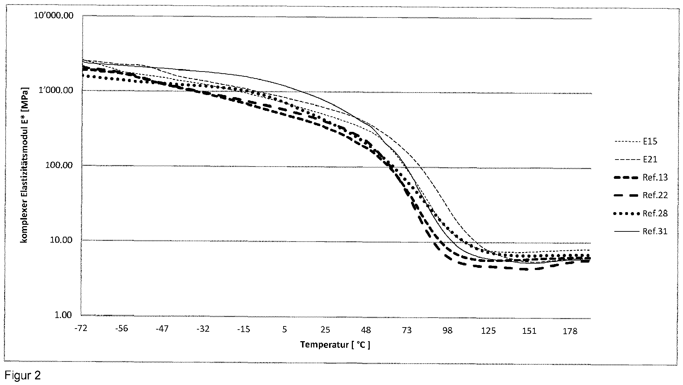

Der Verlauf des E-Moduls (komplexer Elastizitätsmodul E* [MPa] in Abhängigkeit von der Temperatur [°C]) wurde in den Figuren 1 und 2 für die ausgewiesenen Zusammensetzungen wiedergegeben.

Zur Messung der **Zugscherfestigkeit** (Lap-shear strength, kurz LSS) wurden Prüfkörper mit den in Tabelle 7 aufgeführten Zusammensetzungen hergestellt. Der Klebstoff wurde jeweils 1 Minute nach Abschluss der Mischzeit zwischen zwei mit Heptan entfetteten Kohlefaser-verstärkten Komposit-Prüfkörpern (Sika Carbodur Lamellen, Sika AG, Schweiz) in einer Schichtdicke von 0.8 mm und auf einer überlappenden Klebefläche von 10 x 45 mm aufgebracht. Die Prüfkörper wurden während 7 Tagen im Normklima gelagert bzw. ausgehärtet. Es wurde die Zugscherfestigkeit nach DIN EN 1465 mit einer Zuggeschwindigkeit von 10 mm/min bei 23°C (LSS RT), respektive bei 80°C (LSS 80°C) bestimmt.

**Tabelle 1**

| | Ref.1 | Ref.2 | Ref.3 | E1 | Ref.4 | E2 | E3 | E4 | E5 | E6 | Ref.5 |
|---|---|---|---|---|---|---|---|---|---|---|---|
| **K1** | | | | | | | | | | | |
| A1 Ref. (OHZ 56) | 20 | 15 | | | | | | | | | |
| A1 (OHZ 110) | | | 20 | 15 | 19 | 14 | 12 | 10 | 8 | 6 | 5 |
| A2 (OHZ 48) | | 5 | | 5 | | 5 | 7 | 9 | 11 | 13 | 14 |
| A3 (OHZ 770) | 4 | 4 | 4 | 4 | 5 | 5 | 5 | 5 | 5 | 5 | 5 |
| A4 (OHZ 550) | | | | | | | | | | | |
| Molsieb | 1 | 1 | 1 | 1 | 1 | 1 | 1 | 1 | 1 | 1 | 1 |

| **K2** | | | | | | | | | | | |
|---|---|---|---|---|---|---|---|---|---|---|---|
| B1-1 VL | 11.00 | 10.90 | 13.80 | 13.00 | 15.53 | 14.72 | 14.39 | 14.08 | 13.75 | 13.42 | 13.26 |
| B1-2 CD | | | | | | | | | | | |
| | | | | | | | | | | | |
| GZ [min] | 6' | 7' | 5' | 4' | 2' | 2' | 2' | 2' | 2' | 1' | 2' |
| 1.TG [°C] | -20 | -27 | 17 | -50 | 1 | -50 | -58 | -53 | -60 | -48 | -46 |
| 2.TG [°C] | 165 | 165 | 103 | 120 | 111 | 130 | 136 | 148 | 157 | 175 | 188 |
| ZF [MPa] | 11.6 | 9.58 | 17.7 | 16.3 | 22 | 20.2 | 20.7 | 18.6 | 15.5 | 7.68 | 5.03 |
| BD [%] | 66.9 | 67.6 | 58 | 61 | 60.3 | 68.4 | 75.3 | 53.7 | 28.5 | 19.8 | 36.1 |
| E.mod.1 [MPa] | 38.8 | 24.1 | 377 | 419 | 615 | 573 | 634 | 613 | 645 | 176 | 31.1 |
| E.mod.2 [MPa] | 26.51 | 17.7 | 191 | 194 | 300.27 | 262.87 | 275.12 | 279.97 | 247.01 | 86.11 | 21.14 |
| A1/(A2+A3+A4) | 0.36 | 0.25 | 0.71 | 0.50 | 0.54 | 0.38 | 0.32 | 0.26 | 0.20 | 0.15 | 0.12 |
| (A1+A2)/(A3+A4) | 0.36 | 0.35 | 0.71 | 0.61 | 0.54 | 0.46 | 0.43 | 0.40 | 0.37 | 0.33 | 0.32 |
| (A1+A2)/(A3) | 0.36 | 0.35 | 0.71 | 0.61 | 0.54 | 0.46 | 0.43 | 0.40 | 0.37 | 0.33 | 0.32 |
| (A1+A2)/(A4) | - | - | - | - | - | - | - | - | - | - | - |
| A1/A2 | - | 3.5 | - | 6.88 | - | 6.42 | 3.93 | 2.55 | 1.67 | 1.06 | 0.82 |
| A1/A3 | 0.36 | 0.27 | 0.71 | 0.54 | 0.54 | 0.40 | 0.34 | 0.29 | 0.23 | 0.17 | 0.14 |
| Diff.Tg1+Tg2 | 185 | 192 | 103 | 170 | 111 | 180 | 194 | 201 | 217 | 223 | 234 |

**Tabelle 2**

| | Ref.6 | E7 | Ref.7 | E8 | E9 | E10 | E11 | E12 | Ref.8 |
|---|---|---|---|---|---|---|---|---|---|
| **K1** | | | | | | | | | |
| A1 Ref. (OHZ 56) | | | | | | | | | |
| A1 (OHZ 110) | 20 | 15 | 19 | 14 | 12 | 10 | 8 | 6 | 5 |
| A2 (OHZ 48) | | 5 | | 5 | 7 | 9 | 11 | 13 | 14 |
| A3 (OHZ 770) | 4 | 4 | 5 | 5 | 5 | 5 | 5 | 5 | 5 |
| A4 (OHZ 550) | | | | | | | | | |
| Molsieb | 1 | 1 | 1 | 1 | 1 | 1 | 1 | 1 | 1 |

| **K2** | | | | | | | | | |
|---|---|---|---|---|---|---|---|---|---|
| B1-1 VL | | | | | | | | | |
| B1-2CD | 14.80 | 13.92 | 16.66 | 15.77 | 15.42 | 15.08 | 14.73 | 14.38 | 14.21 |
| | | | | | | | | | |
| GZ [min] | 6' | 2' | 3' | 3' | 2' | 3' | 3' | 2' | 1' |
| 1.TG [°C] | - | -57 | - | -58 | -56 | -58 | -55 | -52 | -49 |
| 2.TG [°C] | 100 | 115 | 118 | 136 | 139 | 151 | 152 | 160 | 168 |
| ZF [MPa] | 17.2 | 17.3 | 22.2 | 20.1 | 20 | 20.7 | 18.7 | 11.1 | 7.16 |
| BD [%] | 64.9 | 71.4 | 63.6 | 51.7 | 44.6 | 69.5 | 18.5 | 15.2 | 40 |
| E.mod.1 [MPa] | 451 | 498 | 749 | 690 | 704.33 | 726 | 740 | 422 | 61.6 |
| E.mod.2 [MPa] | 233.41 | 256.49 | 385.79 | 350.78 | 362.06 | 381.59 | 341.67 | 161.38 | 34.73 |
| A1/(A2+A3+A4) | 0.71 | 0.50 | 0.54 | 0.38 | 0.32 | 0.26 | 0.20 | 0.15 | 0.12 |
| (A1+A2)/(A3+A4) | 0.71 | 0.61 | 0.54 | 0.46 | 0.43 | 0.40 | 0.37 | 0.33 | 0.32 |
| (A1+A2)/(A3) | 0.71 | 0.61 | 0.54 | 0.46 | 0.43 | 0.40 | 0.37 | 0.33 | 0.32 |
| (A1+A2)/(A4) | - | - | - | - | - | - | - | - | - |
| A1/A2 | - | 6.88 | - | 6.42 | 3.93 | 2.55 | 1.67 | 1.06 | 0.82 |
| A1/A3 | 0.71 | 0.54 | 0.54 | 0.40 | 0.34 | 0.29 | 0.23 | 0.17 | 0.14 |
| Diff.Tg1+Tg2 | - | 172 | - | 194 | 195 | 209 | 207 | 212 | 217 |

**Tabelle 3**

| | Ref.9 | Ref.10 | Ref.11 | Ref. 12 | Ref.13 | Ref.14 | Ref.15 | Ref.16 | Ref.17 |
|---|---|---|---|---|---|---|---|---|---|
| **K1** | | | | | | | | | |
| A1 Ref. (OHZ 56) | | | | | | | | | |
| A1 (OHZ 110) | 20 | 15 | 19 | 14 | 12 | 10 | 8 | 6 | 5 |
| A2 (OHZ 48) | | 5 | | 5 | 7 | 9 | 11 | 13 | 14 |
| A3 (OHZ 770) | | | | | | | | | |
| A4 (OHZ 550) | 4 | 4 | 5 | 5 | 5 | 5 | 5 | 5 | 5 |
| Molsieb | 1 | 1 | 1 | 1 | 1 | 1 | 1 | 1 | 1 |

| **K2** | | | | | | | | | |
|---|---|---|---|---|---|---|---|---|---|
| B1-1VL | 11.50 | 10.69 | 12.65 | 11.84 | 11.52 | 11.20 | 10.90 | 10.55 | 10.39 |
| B1-2 CD | | | | | | | | | |
| | | | | | | | | | |
| GZ [min] | >120 | >120 | >120 | >120 | >120 | >120 | >120 | >120 | >120 |
| 1.TG [°C] | - | -56 | -52 | -45 | -50 | -53 | -41 | -50 | -52 |
| 2.TG [°C] | 56 | 66 | 75 | 76 | 83 | 72 | 77 | 74 | 75 |
| ZF [MPa] | 6.59 | 12.4 | 10.9 | 12.8 | 13.6 | 12.1 | 8.7 | 6.7 | 6.7 |
| BD [%] | 83 | 135 | 83 | 113 | 113 | 118 | 67 | 59 | 59 |
| E.mod.1 [MPa] | 25.2 | 129 | 172 | 190 | 396 | 192 | 267 | 328 | 184 |
| E.mod.2 [MPa] | 20.3 | 43.7 | 74.7 | 95.9 | 117.7 | 95.8 | 94.5 | 60.4 | 56.5 |
| A1/(A2+A3+A4) | 0.71 | 0.50 | 0.54 | 0.38 | 0.32 | 0.26 | 0.20 | 0.15 | 0.12 |
| (A1+A2)/(A3+A4) | 0.71 | 0.61 | 0.54 | 0.46 | 0.43 | 0.40 | 0.37 | 0.33 | 0.32 |
| (A1+A2)/(A3) | - | - | - | - | - | - | - | - | - |
| (A1+A2)/(A4) | 0.71 | 0.61 | 0.54 | 0.46 | 0.43 | 0.40 | 0.37 | 0.33 | 0.32 |
| A1/A2 | - | 6.88 | - | 6.42 | 3.93 | 2.55 | 1.67 | 1.06 | 0.82 |
| A1/A3 | - | - | - | - | - | - | - | - | - |
| Diff.Tg1+Tg2 | - | 122 | 127 | 121 | 133 | 125 | 118 | 124 | 127 |

**Tabelle 4**

| | Ref.18 | Ref.19 | Ref.20 | Ref.21 | Ref.22 | Ref.23 | Ref.24 | Ref.25 | Ref.26 |
|---|---|---|---|---|---|---|---|---|---|
| **K1** | | | | | | | | | |
| A1 Ref. (OHZ 56) | | | | | | | | | |
| A1 (OHZ 110) | 20 | 15 | 19 | 14 | 12 | 10 | 8 | 6 | 5 |
| A2 (OHZ 48) | | 5 | | 5 | 7 | 9 | 11 | 13 | 14 |
| A3 (OHZ 770) | | | | | | | | | |
| A4 (OHZ 550) | 4 | 4 | 5 | 5 | 5 | 5 | 5 | 5 | 5 |
| Molsieb | 1 | 1 | 1 | 1 | 1 | 1 | 1 | 1 | 1 |

| **K2** | | | | | | | | | |
|---|---|---|---|---|---|---|---|---|---|
| B1-1 VL | | | | | | | | | |
| B1-2CD | 12.33 | 11.46 | 13.56 | 12.69 | 12.34 | 12.00 | 11.65 | 11.30 | 11.13 |
| | | | | | | | | | |
| GZ [min] | >120 | >120 | >120 | >120 | >120 | >120 | >120 | >120 | >120 |
| 1.TG [°C] | 14 | -42 | 5 | -55 | -55 | -42 | -58 | -52 | -52 |
| 2.TG [°C] | 66 | 70 | 74 | 77 | 80 | 88 | 82 | 84 | 90 |
| ZF [MPa] | 13.1 | 16.6 | 14.3 | 18.1 | 18.9 | 16.6 | 17.1 | 10.9 | 8.8 |
| BD [%] | 116.6 | 147.1 | 89 | 135.1 | 150.8 | 134.9 | 148 | 74.2 | 37 |
| E.mod.1 [MPa] | 218 | 286 | 382 | 471 | 427 | 503 | 463 | 440 | 214 |
| E.mod.2 [MPa] | 84.9 | 107.7 | 162.6 | 190.4 | 191.6 | 199.3 | 174.9 | 137.7 | 104 |
| A1/(A2+A3+A4) | 0.71 | 0.50 | 0.54 | 0.38 | 0.32 | 0.26 | 0.20 | 0.15 | 0.12 |
| (A1+A2)/(A3+A4) | 0.71 | 0.61 | 0.54 | 0.46 | 0.43 | 0.40 | 0.37 | 0.33 | 0.32 |
| (A1+A2)/(A3) | - | - | - | - | - | - | - | - | - |
| (A1+A2)/(A4) | 0.71 | 0.61 | 0.54 | 0.46 | 0.43 | 0.40 | 0.37 | 0.33 | 0.32 |
| A1/A2 | - | 6.88 | - | 6.42 | 3.93 | 2.55 | 1.67 | 1.06 | 0.82 |
| A1/A3 | - | - | - | - | - | - | - | - | - |
| Diff.Tg1+Tg2 | | | | | | | | | |

**Tabelle 5**

| | Ref.27 | E13 | Ref.28 | E14 | E15 | E16 | E17 | E18 | Ref.29 |
|---|---|---|---|---|---|---|---|---|---|
| **K1** | | | | | | | | | |
| A1 Ref. (OHZ 56) | | | | | | | | | |
| A1 (OHZ 110) | 20 | 15 | 19 | 14 | 12 | 10 | 8 | 6 | 5 |
| A2 (OHZ 48) | | 5 | | 5 | 7 | 9 | 11 | 13 | 14 |
| A3 (OHZ 770) | 1.6 | 1.6 | 2 | 2 | 2 | 2 | 2 | 2 | 2 |
| A4 (OHZ 550) | 2.4 | 2.4 | 3 | 3 | 3 | 3 | 3 | 3 | 3 |
| Molsieb | | | | | | | | | |

| **K2** | | | | | | | | | |
|---|---|---|---|---|---|---|---|---|---|
| B1-1VL | 12.42 | 11.61 | 13.81 | 12.99 | 12.67 | 12.35 | 12.02 | 11.70 | 11.54 |
| B1-2 CD | | | | | | | | | |
| | | | | | | | | | |
| GZ [min] | 44' | 35' | 25' | 22' | 19' | 17' | 13' | 11' | 9' |
| 1.TG [°C] | - | 0 | 10 | -55 | -55 | -50 | -40 | -53 | -40 |
| 2.TG [°C] | 71 | 80 | 89 | 84 | 89 | 96 | 105 | 119 | 130 |
| ZF [MPa] | 12.6 | 13.7 | 17.17 | 18 | 18.2 | 17.7 | 14.47 | 10.5 | 5.8 |
| BD [%] | 79.8 | 93 | 80.46 | 93.7 | 85.5 | 74.27 | 56.9 | 35.3 | 20.35 |
| E.mod.1 [MPa] | 183 | 197 | 306 | 295 | 368 | 508 | 410 | 301 | 229 |
| E.mod.2 [MPa] | 71.63 | 79.08 | 145.35 | 149.06 | 171.18 | 182.83 | 179.8 | 141.79 | 78.59 |
| A1/(A2+A3+A4) | 0.86 | 0.59 | 0.66 | 0.45 | 0.37 | 0.30 | 0.24 | 0.17 | 0.14 |
| (A1+A2)/(A3+A4) | 0.86 | 0.74 | 0.66 | 0.56 | 0.52 | 0.48 | 0.44 | 0.40 | 0.38 |
| (A1+A2)/(A3) | 1.79 | 1.53 | 1.36 | 1.16 | 1.08 | 0.99 | 0.91 | 0.83 | 0.79 |
| (A1+A2)/(A4) | 1.67 | 1.43 | 1.27 | 1.08 | 1.00 | 0.93 | 0.85 | 0.78 | 0.74 |
| A1/A2 | - | 6.88 | - | 6.42 | 3.93 | 2.55 | 1.67 | 1.06 | 0.82 |
| A1/A3 | 1.79 | 1.34 | 1.36 | 1.00 | 0.86 | 0.71 | 0.57 | 0.43 | 0.36 |
| Diff.Tg1+Tg2 | - | 80 | 79 | 139 | 144 | 146 | 145 | 172 | 170 |

**Tabelle 6**

| | Ref.30 | E19 | Ref.31 | E20 | E21 | E22 | E23 | E24 | Ref.32 |
|---|---|---|---|---|---|---|---|---|---|
| **K1** | | | | | | | | | |
| A1 Ref. (OHZ 56) | | | | | | | | | |
| A1 (OHZ 110) | 20 | 15 | 19 | 14 | 12 | 10 | 8 | 6 | 5 |
| A2 (OHZ 48) | | 5 | | 5 | 7 | 9 | 11 | 13 | 14 |
| A3 (OHZ 770) | 1.6 | 1.6 | 2 | 2 | 2 | 2 | 2 | 2 | 2 |
| A4 (OHZ 550) | 2.4 | 2.4 | 3 | 3 | 3 | 3 | 3 | 3 | 3 |
| Molsieb | 1 | 1 | 1 | 1 | 1 | 1 | 1 | 1 | 1 |

| **K2** | | | | | | | | | |
|---|---|---|---|---|---|---|---|---|---|
| B1-1 VL | | | | | | | | | |
| B1-2CD | 13.31 | 12.44 | 14.79 | 13.92 | 13.58 | 13.23 | 12.88 | 12.53 | 12.35 |
| | | | | | | | | | |
| GZ [min] | 75' | 60' | 53' | 35' | 25' | 17' | 15' | 13' | 12' |
| 1.TG [°C] | - | -44 | - | -44 | -47 | -47 | -40 | -58 | -50 |
| 2.TG [°C] | 78 | 84 | 87 | 97 | 97 | 104 | 112 | 124 | 132 |
| ZF [MPa] | 15.8 | 16.7 | 18.7 | 19.6 | 18.35 | 18.6 | 17.8 | 13 | 9.53 |
| BD [%] | 94.9 | 100.4 | 81.3 | 101.9 | 100.15 | 94.4 | 96.35 | 32.3 | 30.1 |
| E.mod.1 [MPa] | 316 | 346 | 494 | 530 | 537 | 516 | 488 | 483 | 288 |
| E.mod.2 [MPa] | 144.27 | 172.37 | 257.36 | 259.09 | 252.3 | 263.27 | 261.33 | 229.35 | 135.88 |
| A1/(A2+A3+A4) | 0.86 | 0.59 | 0.66 | 0.45 | 0.37 | 0.30 | 0.24 | 0.17 | 0.14 |
| (A1+A2)/(A3+A4) | 0.86 | 0.74 | 0.66 | 0.56 | 0.52 | 0.48 | 0.44 | 0.40 | 0.38 |
| (A1+A2)/(A3) | 1.79 | 1.53 | 1.36 | 1.16 | 1.08 | 0.99 | 0.91 | 0.83 | 0.79 |
| (A1+A2)/(A4) | 1.67 | 1.43 | 1.27 | 1.08 | 1.00 | 0.93 | 0.85 | 0.78 | 0.74 |
| A1/A2 | - | 6.88 | - | 6.42 | 3.93 | 2.55 | 1.67 | 1.06 | 0.82 |
| A1/A3 | 1.79 | 1.34 | 1.36 | 1.00 | 0.86 | 0.71 | 0.57 | 0.43 | 0.36 |
| Diff.Tg1+Tg2 | - | 128 | - | 141 | 144 | 151 | 152 | 182 | 182 |

**Tabelle 7**

| | Ref.7 | E9 | Ref.22 | Ref.31 | E21 | Ref.2 | E1 | Ref.4 | E3 | Ref.5 | Ref.13 | Ref.28 | E15 |
|---|---|---|---|---|---|---|---|---|---|---|---|---|---|
| **K1** | | | | | | | | | | | | | |
| A1 Ref. (OHZ 56) | | | | | | 15 | | | | | | | |
| A1 (OHZ 110) | 19 | 12 | 12 | 19 | 12 | | 15 | 19 | 12 | 5 | 12 | 19 | 12 |
| A2 (OHZ 48) | | 7 | 7 | | 7 | 5 | 5 | | 7 | 14 | 7 | | 7 |
| A3 (OHZ 770) | 5 | 5 | | 2 | 2 | 4 | 4 | 5 | 5 | 5 | | 2 | 2 |
| A4 (OHZ 550) | | | 5 | 3 | 3 | | | | | | 5 | 3 | 3 |
| Molsieb | 1 | 1 | 1 | 1 | 1 | 1 | 1 | 1 | 1 | 1 | 1 | 1 | 1 |

| **K2** | | | | | | | | | | | | | |
|---|---|---|---|---|---|---|---|---|---|---|---|---|---|
| B1-1VL | | | | | | 10.90 | 13.00 | 15.53 | 14.39 | 13.26 | 11.52 | 13.81 | 12.67 |
| B1-2CD | 16.66 | 15.42 | 12.34 | 14.79 | 13.58 | | | | | | | | |
| | | | | | | | | | | | | | |
| LSS RT [MPa] | 10.2 | 13.9 | 11.7 | 11.6 | 12.5 | 6.0 | 12.6 | 12.0 | 13.1 | 5.6 | 9.7 | 11.2 | 11.6 |
| LSS 80°C [MPa] | 5.2 | 5.5 | 1.6 | 3.5 | 5.2 | 3.5 | 6.8 | 5.2 | 6.2 | 3.3 | 1.4 | 3.4 | 5.3 |

In den Tabellen 1-7 sind die Komponenten der Polyolkomp. **K1,** respektive der Polyisocyanatkomp. **K2,** in Gewichtsteilen angegeben. Die Angaben **A1/(A2+A3+A4), (A1+A2)/(A3+A4), (A1+A2)/(A3), (A1+A2)/(A4), A1/A2** und **A1/A3** beziehen sich auf das molare Verhältnis der OH-Gruppen.

"Gelation Time (GT) [min]" als Mass für die Offenzeit wurde die Topfzeit im Becher bestimmt. Dazu wurden 20 g der Polyolkomp. **K1** mit der entsprechenden Menge an Polyisocyanatkomp. **K2** für 30 Sekunden gemischt und der Zeitpunkt bestimmt, an dem Gelierung eintritt, das heisst die gemischte Zusammensetzung an einem 15 cm langen Metallspatel (Spatelschaufel 30 x 10 mm Länge/Breite) einen Fadenabriss beim Aufrühren aufweist.

Bei **E1** bis **E24** handelt es sich um erfindungsgemässe Beispiele. Bei **Ref.1** bis **Ref.32** handelt es sich um Vergleichsbeispiele.

## Patentansprüche

1. Zweikomponentige Polyurethanzusammensetzung bestehend aus einer Polyolkomponente **K1** und einer Polyisocyanatkomponente **K2;**
wobei die Polyolkomponente **K1**
- mindestens ein Polyesterpolyol **A1** basierend auf Dimerfettsäuren und/oder Dimerfettalkoholen mit einer OH-Zahl von 65 - 350 mg KOH/g; und
- mindestens ein Polybutadienpolyol mit einer OH-Funktionalität im Bereich von 2.1 - 2.9, insbesondere 2.3 - 2.7 und einer OH-Zahl von 40 - 100 mg KOH/g **A2;** und
- mindestens ein alkoxyliertes Alkylendiamin mit einer OH-Zahl von 350 - 950 mg KOH/g **A3;**
umfasst,
und wobei die Polyisocyanatkomponente **K2**
mindestens ein aromatisches Polyisocyanat **B1** umfasst,
wobei das Verhältnis der OH-Gruppen von **A1/A2** von 1 - 20 beträgt.

2. Zweikomponentige Polyurethanzusammensetzung gemäss Anspruch 1, **dadurch gekennzeichnet, dass** es sich bei dem mindestens einen Polyesterpolyol **A1** um ein Polyesterpolyol **A1** basierend auf Dimerfettsäuren abgeleitet von C₁₀ - C₂₆- Fettsäuren, bevorzugter C₁₂ - C₂₂- Fettsäuren, insbesondere C₁₄ - C₂₂-Fettsäuren, C₁₆ - C₂₀-Fettsäuren, am meisten bevorzugt C₁₈-Fettsäuren, handelt.

3. Zweikomponentige Polyurethanzusammensetzung gemäss einem der vorgehenden Ansprüche, **dadurch gekennzeichnet, dass** es sich um ein alkoxyliertes Alkylendiamin mit einer OH-Zahl von 350 - 950 mg KOH/g **A3** ausgewählt aus der Liste bestehend aus N,N,N',N'-Tetrakis(2-hydroxyethyl)-ethylendiamin und N,N,N',N'-Tetrakis(2-hydroxypropyl)-ethylendiamin, insbesondere N,N,N',N'-Tetrakis(2-hydroxypropyl)-ethylendiamin, handelt.

4. Zweikomponentige Polyurethanzusammensetzung gemäss einem der vorgehenden Ansprüche, **dadurch gekennzeichnet, dass** die Polyolkomponente **K1** zusätzlich mindestens ein aliphatisches Triol **A4** aufweist, wobei es sich bei dem aliphatischen Triol **A4** um:
- 1,2,3-Propantriol und/oder
- 1,1,1-Trimethylolpropan und/oder
- besonders bevorzugt Polyetherpolyole basierend auf 1,1,1-Trimethylolpropan mit einem Molekulargewicht von 170-500 g/mol und einer OH-Zahl von 400-1100 mg KOH/g, handelt.

5. Zweikomponentige Polyurethanzusammensetzung gemäss einem der vorgehenden Ansprüche, **dadurch gekennzeichnet, dass** das Verhältnis der OH-Gruppen von **A1/A2** von 1-8, 1.5-7, 2-7, 2.5-6.5, besonders bevorzugt 3-6, beträgt.

6. Zweikomponentige Polyurethanzusammensetzung gemäss einem der vorgehenden Ansprüche, **dadurch gekennzeichnet, dass** das Verhältnis der OH-Gruppen von **(A1+A2)/(A3+** gegebenenfalls **A4)** ≤ 0.6 beträgt.

7. Zweikomponentige Polyurethanzusammensetzung gemäss einem der vorgehenden Ansprüche, **dadurch gekennzeichnet, dass** das Verhältnis aller NCO-Gruppen der aromatischen Polyisocyanate **B1** : aller OH-Gruppen der Polyolkomponente **K1** = 0.9 : 1 - 1.2 : 1, insbesondere 1.0 : 1 - 1.1 : 1, beträgt.

8. Zweikomponentige Polyurethanzusammensetzung gemäss einem der vorgehenden Ansprüche, **dadurch gekennzeichnet, dass** es sich bei dem aromatischen Polyisocyanat **B1** um monomeres MDI oder Oligomere, Polymere und Derivate abgeleitet von MDI, insbesondere mit einer mittleren NCO-Funktionalität von 2.0 - 4.0, vorzugsweise 2.0 - 3.0, insbesondere 2.1 - 2.6, handelt.

9. Zweikomponentige Polyurethanzusammensetzung gemäss einem der vorgehenden Ansprüche, **dadurch gekennzeichnet, dass** die Summe aller OH-Gruppen von (**A1+A2+A3**+gegebenenfalls **A4**) ≥80%, vorzugsweise ≥90%, insbesondere ≥95%, insbesondere bevorzugt ≥98%, am meisten bevorzugt ≥99%, der Summe aller OH-Gruppen der zweikomponentigen Polyurethanzusammensetzung beträgt.

10. Verfahren zum Verkleben von einem ersten Substrat mit einem zweiten Substrat umfassend die Schritte
- Mischen der Polyolkomponente **K1** und der Polyisocyanatkomponente **K2** einer zweikomponentigen Polyurethanzusammensetzung gemäss einem der Ansprüche 1 bis 9,
- Applizieren der vermischten Polyurethanzusammensetzung auf mindestens eine der zu verklebenden Substratoberflächen,
- Fügen der zu verklebenden Substrate innerhalb der Offenzeit,
- Aushärten der Polyurethanzusammensetzung.

11. Verklebter Artikel erhalten aus einem Verfahren gemäss Anspruch 10.

12. Verwendung einer zweikomponentigen Polyurethanzusammensetzung gemäss einem der Ansprüche 1 bis 9 als struktureller Klebstoff zum Verkleben von zwei Substraten.

13. Verfahren zum Verfüllen von Fugen und Spalten in einem Substrat umfassend die Schritte
a) Mischen der Polyolkomponente **K1** und der Polyisocyanatkomponente **K2** einer zweikomponentigen Polyurethanzusammensetzung gemäss einem der Ansprüche 1 bis 9,
b) Applizieren der vermischten Polyurethanzusammensetzung in die zu verfüllende Fuge oder den zu verfüllenden Spalt des Substrates,
c) Aushärten der Polyurethanzusammensetzung in der Fuge oder im Spalt.

14. Artikel erhalten aus dem Verfahren gemäss Anspruch 13.

15. Verwendung einer zweikomponentigen Polyurethanzusammensetzung gemäss einem der Ansprüche 1 bis 9 als Infusionsharz, insbesondere zur Herstellung von faserverstärkten Verbundwerkstoffteilen, besonders bevorzugt in Infusionsverfahren.
